# EUROPEAN PATENT APPLICATION

(11) **EP 3 357 328 A1**
(43) Date of publication of application: **08.08.2018**
(21) Application number: 18155349.6
(22) Date of filing: 06.02.2018
(51) Int. Cl.: A01G 9/12, A01G 9/02, A01G 9/04, A01G 9/029

(54) **TRAY AND ADAPTER TRAY**

(30) Priority: 06.02.2017 NL 2018311
(71) Applicant: Bato Plastics B.V., 4762 AH Zevenbergen (NL)
(72) Inventor: SPIERINGS, Geertrudes Johannes Martines, HOOGSTRATEN (BE)
(74) Representative: Haan, Raimond

(57) **Abstract**

The present invention relates to a tray, comprising:
- at least one plant accommodation having a bottom and at least one side wall;
- at least one support extending past the bottom of the plant accommodation and defining a barrier; and
- said barrier preventing contact between roots of a plant in the plant accommodation and splash water.

## Description

The present invention relates to a tray, more in particular to a plant tray, and an adapter tray that may be used in an assembly with a conventional tray.

Plant trays are used in horticulture for growing young plants. Trays are often stackable and nestable, and moreover easy to handle by a grower.

Some plants, such as soft fruits, in particular strawberries, are grown in trays to reduce the risks of contamination of the plants by diseases. Accommodations in the trays separate the plants from each other, and also prevent the plants to be planted in a common soil via which diseases may be passed easily between plants. Nevertheless, even plants in trays remain susceptible to diseases when they are placed close to each other.

WO 2013/019105 discloses a plant tray for propagating plants, having mulitple cups. The cups have a bottom structure that is penetratable for a primary root of a plant growing in a downward direction. The tray further includes a spacer extending downwardly, beyond a bottom structure of the cup. The length of the spacer is chosen such that an air barrier is realized between the bottom structure of the cup and the surface supporting the plant tray, wherein a minimum height of the air barrier can e.g. be 1 mm, particularly 2 mm. Such a small height is enough for the roots to pass through the penetratable bottom, and preventing that the primary root turns and grows upwardly in the cup. The spacer provides an air chamber (i.e. a primary root receiving space) located below the bottom structure of the cup, wherein the spacer counteracts that the bottom structure of the cups contacts a surface carrying the tray. In this way, the tip of the primary root protruding through the cup's bottom may be mechanically protected during transport and/or storage. Applicant recognized that many of the plants in such prior art trays died by rotting of the roots and spreading of diseases.

An object of the present invention is to provide a tray, that is improved relative to the prior art and wherein at least one of the above stated problems is obviated. More in particular, the objective is to provide a plant tray in which more plants grow to adulthood and can be commercially exploited.

Said object is achieved with the tray according to the present invention, comprising:
- at least one plant accommodation having a bottom with a drainage opening and at least one side wall;
- at least one support extending past the bottom of the plant accommodation and defining a barrier; and
- said barrier preventing contact between roots of a plant in the plant accommodation and splash water.

Applicant has discovered that a plant having a disease, may spread the disease via drainage of water through the drainage opening out of its respective accommodation. At first, it was expected that direct contact between the roots of plants and water, e.g. in a puddle below the tray, would be the sole reason why diseased spread relatively fast between plants. However, Applicant recognized that many plants still inexplicably died even with spacers that were large enough to prevent any direct contact between the roots and the puddle. It was only then, in a second insight, it was recognized that the contaminated water may splash up, e.g. during heavy rain, and may in this way come into contact with the roots of adjacent plants. In this way, a disease may spread as wildfire, and contaminate many plants.

By providing a barrier that prevents contact between roots of a plant in the plant accommodation and splash water, the risk of cross-contamination is reduced. Thus, the present invention not only prevents the roots from directly contacting the water in a puddle below the tray by providing a barrier of a limited height, but adds additional length to said barrier to also prevent contact of the roots with splash water.

In the prior art tray disclosed in WO 2013/019105, with a minimum height of the air barrier of 1 mm, a root may penetrate through the bottom, but - in the circumstance of the tray standing in a puddle - will most likely directly contact the water and possibly spread any diseases via the water. WO 2013/019105 mentions that an air barrier having a height higher that 0.2 cm, for example at least about 0.5 cm, is expected to lead to better results. For practical root lengths, a height of 0.5 cm will still not be enough to prevent direct contact with water when roots are extending through the bottom and the tray is placed in a puddle. With hindsight, this was a primary, but not the only, reason for diseases spreading among plants planted in the cups of the prior art tray of WO 2013/019105. A secondary reason of spreading of diseases was the splash water that could still contact the roots due to the limited height of the air barrier as taught by WO 2013/019105, which only served for the roots to penetrate though the bottom and to be mechanically protected during transport and/or storage.

Applicant has recognized that splash water is a secondary, but significant, mechanism causing spreading of diseases, and therefore proposes to apply a tray comprising a barrier preventing contact between roots of a plant in the plant accommodation and splash water.

The invention is further related to an adapter tray that may be used in an assembly with a conventional tray. In this way, conventional trays may be used in an assembly, wherein contact between roots of a plant in the plant accommodation and splash water is prevented.

Preferred embodiments are the subject of the dependent claims. They describe alternative solutions for an effective barrier.

In the following description preferred embodiments of the present invention are further elucidated with reference to the drawing, in which:
Figure 1 is a perspective view of a tray according to a first embodiment of the invention;
Figure 2 is a side view of the tray according to the first embodiment;
Figure 3 is a top view of the tray according to the first embodiment;
Figure 4 is a frontal view of the tray according to the first embodiment;
Figure 5 is a perspective view of two adjacently positioned trays according to the first embodiment; and
Figure 6 is a frontal view of a conventional tray with a tray adapter according to a second embodiment.

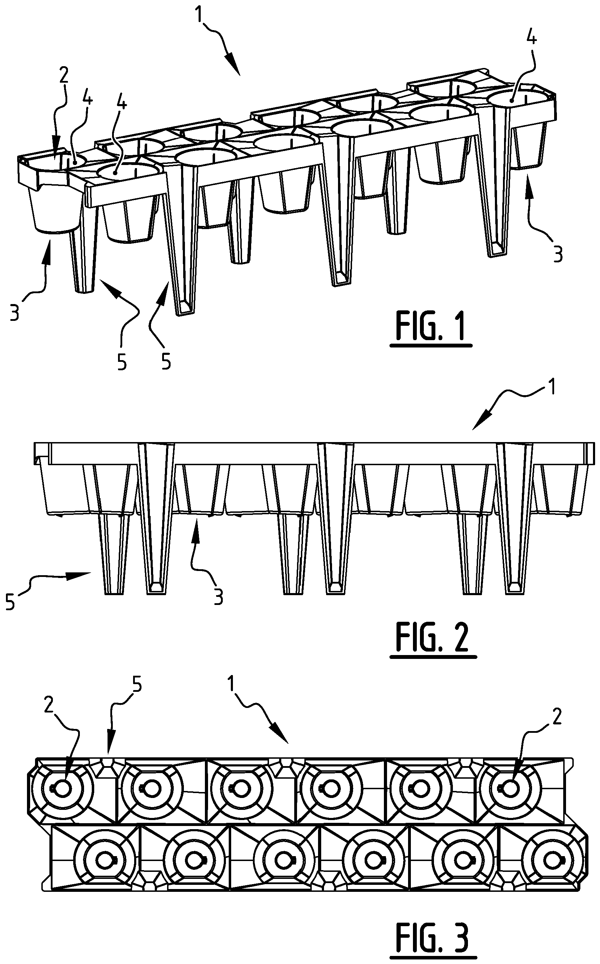

A tray 1 according to a first embodiment is shown in Figures 1-5. The tray 1 comprises at least one plant accommodation 2 having a bottom 3 with a drainage opening 11 and at least one side wall 4. The shown tray 1 comprises twelve plant accommodations 2. The tray 1 further comprises at least one support 5 extending past the bottom 3 of the plant accommodation 2. The shown tray 1 comprises six supports 5. The supports 5 are configured to space the bottom 3 of the plant accommodation 2 at a distance from a surface, such as the ground, and in this way define a barrier 6.

The barrier 6 of the tray 1 according to the invention is preventing contact between roots 7 of a plant 8 in the plant accommodation 2 and splash water.

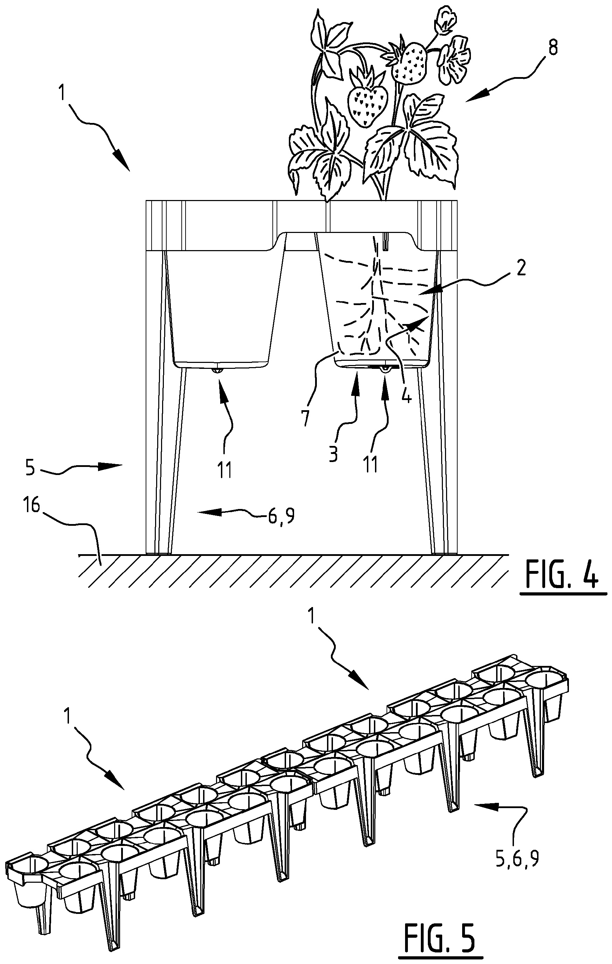

The plant accommodation 2 comprises an opening 11 in the bottom 3 thereof. This opening 11 is configured for drainage of excessive water in the plant accommodation 2. If a plant 8 has a disease, the disease may spread via drainage of water out of its respective accommodation 2 via the opening 11. A ground surface and/or puddles with contaminated water may be formed on the surface 16 supporting the tray 1. The contaminated water may splash up, e.g. during heavy rain, and may in this way come into contact with the roots 7 of adjacent plants 8. In this way, a disease may spread as wildfire, and contaminate many plants 8. Multiple trays 1 may be positioned in rows, as shown in Figure 5.

The barrier 6 may be embodied in various ways, as will be described below.

In the first embodiment, the barrier 6 comprises an extension 9 of at least one support 5. The extension 9 may form an integral part of the at least one support 5. In Figures 1-5, all six supports 5 are extended, and all six extensions 9 are an integral part of their respective support 5.

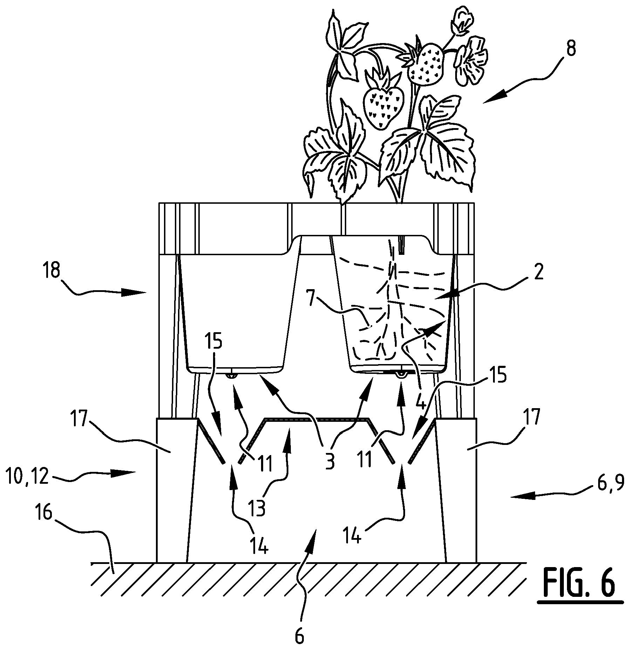

Alternatively, the extension 9 may comprise an adapter 10 configured to engage the at least one support 5. Each support 5 may comprise a corresponding adapter 10, but - according to a further preferred embodiment (Figure 6) - the adapter 10 preferably comprises an adapter tray 12 configured to engage multiple supports 5. An adapter tray 12 instead of separate adapters 10 for each support 5 greatly enhances handling.

For all embodiments, the extension 9 has a length such that the bottom 3 of the plant accommodation 2 is sufficiently spaced from a surface 16 to prevent splash water contacting the roots 7 of the plant 8 in the plant accommodation 2.

The extension 9 provides a distance placing the bottom 3 of the plant accommodation 2 at least 5 cm, preferably at least 6 cm, more preferably at least 7 cm, and most preferably at least 8 cm, from a surface 16.

The barrier 6 may also comprise a wall 13. In the second embodiment shown in Figure 6, the wall 13 is remote from the bottom 3 of the plant accommodation 2. The wall 13 prevents splash water splashing against the bottom 3 of the plant accommodation 2.

The wall 13 may comprises a further drainage opening 14, which is preferably arranged in a funnel 15. Each plant accommodation 2 may have a drainage opening 11 and a corresponding further drainage opening 14.

If the wall 13 is substantially transparent, (sun)light will reach the bottom 3 and drainage opening 11. Some plants, such as strawberries, will reduce the growth of roots 7 that are exposed to light. In this way, light being exposed on the bottom 3 may be considered to form a barrier 6 that prevents contact between roots of a plant 8 in the plant accommodation 2 and splash water. Of course, an extension 9 of a support 5 also improves the amount of light reaching the bottom 3 of the plant accommodation 2.

An alternative (not shown) barrier 6 may be embodied as a mirror arranged on the surface 16, configured to reflect (sun)light to the bottom 3 of the plant accommodation 2.

In Figure 6, the wall 13 is an integral part of the adapter tray 12. The wall 13 is arranged between supports 17 of the adapter tray 12.

Figure 6 shows a second embodiment of the invention, comprising an assembly of a conventional tray 18 and an adapter tray 12. In order to allow a grower to use the conventional trays 18 in his/her possession, and still benefit from the present invention, the grower may use an adapter tray 12. Similar reference numbers are used for the similar components of the tray 1 according to the invention, and the conventional tray 18 that forms prior art.

The conventional tray 18 also comprises supports 5 and at least one plant accommodation 2 having a bottom 3 and at least one side wall 4. The supports 5 are however only of a very limited height. The supports 5 are only configured to place the bottom 3 slightly above a surface in order to have the drainage opening 11 free for drainage of any excessive water in the plant accommodation 2. For high-volume injection molding products such as the conventional tray 18, it is desired to increase stability, improve nestability, and to reduce the amount of material required for the product. Therefore, the supports 5 of a conventional tray 18 are preferably as small as possible.

The assembly of the conventional tray 18 and an adapter tray 12 shown in Figure 6 also comprises:
- at least one plant accommodation 2 having a bottom 3 and at least one side wall 4;
- at least one support 5 extending past the bottom 3 of the plant accommodation 2; and
- a barrier 6 configured to prevent contact between roots 7 of a plant 8 in the plant accommodation 2 and splash water.

In the second embodiment shown in Figure 6, there are two types of barrier 6. On the one hand, the barrier 6 comprises an extension 9 of at least one support 5. The extension 9 is now an integral part of the adapter tray 12. On the other hand, the barrier 6 also comprises the wall 13. Thus, in Figure 6, the barrier 6 is a combination of wall 13, and extension 9 provided by the supports 17 of the adapter tray 12.

The skilled person will understand that, if a wall 13 is provided as a barrier 6, the extension 9 provided by the supports may be of a limited height. In principle, it is sufficient if the extension 9 spaces the wall 13 at a distance above the ground 16.

As described above in relation to the first and second embodiments, the barrier 6 may be formed in various ways. An extension 9 may provide a distance between the bottom 3 and the surface 16 that is large enough to prevent water splashing against the bottom 3. A wall 13 may also form a barrier 6.

Other (not shown) embodiments of a barrier may comprise one or more of the following:
- a suspension of a tray 1 at a height such that the bottom 3 of the plant accommodation 2 is sufficiently spaced from a surface to prevent splash water contacting the roots 7 of the plant 8 in the plant accommodation 2;
- root cloth arranged in the plant accommodations 2;
- an (absorbing) fabric that is arranged or suspended between the bottom 3 and the surface 16, forming a substitute for wall 13;
- an absorbing material, such as a sponge, that is arranged between the bottom 3 and the surface 16, and may be placed on the surface 16; and
- a tube-like or hose-like extension of the drainage opening 11.

Although they show preferred embodiments of the invention, the above described embodiments are intended only to illustrate the invention and not to limit in any way the scope of the invention. Accordingly, it should be understood that where features mentioned in the appended claims are followed by reference signs, such signs are included solely for the purpose of enhancing the intelligibility of the claims and are in no way limiting on the scope of the claims.

Although shown in conjunction with strawberries, the tray 1 and adapter tray 12 may be used for different plants. Nevertheless, the invention is particularly suitable for growing soft fruits, such as strawberries, currants, raspberries, and blackberries.

Furthermore, it is particularly noted that the skilled person can combine technical measures of the different embodiments. For example, in Figure 6, the wall 13 is embodied as an integral part of the adapter tray 10 in the second embodiment. The first embodiment shown in Figure 4 may also comprise such a wall 13 that is embodied as an integral part of the tray 1. If tray 1 is provided with a wall 13, the supports 5 may be of a limited height, as the wall 13 also functions as a barrier 6.

The scope of the invention is therefore defined solely by the following claims.

## Claims

1. Tray, comprising:
- at least one plant accommodation having a bottom with a drainage opening and at least one side wall; and
- at least one support extending past the bottom of the plant accommodation and defining a barrier;
**characterized by** said barrier preventing contact between roots of a plant in the plant accommodation and splash water.

2. Tray according to claim 1, wherein the barrier comprises a wall.

3. Tray according to claim 2, wherein the wall is remote from the bottom of the plant accommodation.

4. Tray according to claim 3, wherein the wall comprises a further drainage opening.

5. Tray according to claim 4, wherein the further drainage opening is arranged in a funnel.

6. Tray according to any of the foregoing claims, wherein the barrier comprises an extension of at least one support.

7. Tray according to claim 6, wherein the extension is an integral part of the at least one support.

8. Tray according to claim 6, wherein the extension comprises an adapter configured to engage the at least one support.

9. Tray according to claim 8, wherein the adapter comprises an adapter tray configured to engage multiple supports.

10. Tray according to any of claims 6-9, the extension having a length such that the bottom of the plant accommodation is sufficiently spaced from a surface to prevent splash water contacting the roots of the plant in the plant accommodation.

11. Tray according to any of claims 6-10, wherein the extension provides a distance placing the bottom of the plant accommodation at least 5 cm, preferably at least 6 cm, more preferably at least 7 cm, and most preferably at least 8 cm, from a surface.

12. Tray according to any of claims 2-11, wherein the wall is substantially transparent.

13. Tray according to any of claims 9-12, wherein the wall is an integral part of the adapter tray.

14. Adapter tray, comprising the features according to any of claims 9-13.
